# EUROPEAN PATENT SPECIFICATION

(11) **EP 3 313 800 B1**
(45) Date of publication and mention of the grant of the patent: **05.08.2026**
(21) Application number: 16734277.3
(22) Date of filing: 28.06.2016
(51) Int. Cl.: C04B 22/14, C04B 40/00, C01F 7/74

(54) **ALKALI FREE ALUMINATE SULFATE BASED SHOTCRETE ACCELERATOR AS REDISPERSIBLE SOLID**
ALKALIFREIER SULFOALUMINATBASIERTER SPRITZBETONBESCHLEUNIGER ALS REDISPERGIERBARER FESTSTOFF
ACCÉLÉRATEUR DE BÉTON PROJETÉ À BASE DE SULFATE D'ALUMINATE SANS ALCALIN SOUS FORME DE SOLIDE REDISPERSIBLE

(30) Priority: 29.06.2015 EP 15174383
(43) Date of publication of application: 02.05.2018
(73) Proprietor: Sika Technology AG, 6340 Baar (CH)
(72) Inventor: GALLUCCI, Emmanuel, 8048 Zürich (CH); JUILLAND, Patrick, 3005 Bern (CH); SCHÖNENBERGER, Denise, 8483 Kollbrunn (CH); LINDLAR, Benedikt, 78467 Konstanz (DE); STENGER, Christian, 5024 Küttigen (CH)
(74) Representative: Sika Patent Attorneys
(86) International application number: PCT/EP2016/065028
(87) International publication number: WO 2017/001413

(56) References cited:
- WO-A2-2015/092004
- AT-U1- 8 344
- US-A- 4 526 772
- WING Y ET AL: "Proton conducting membranes composed of hydronium alunite", MATERIALS RESEARCH BULLETIN, ELSEVIER, KIDLINGTON, GB, vol. 15, no. 11, 1 November 1980 (1980-11-01), pages 1649 - 1654, XP024080624, ISSN: 0025-5408, [retrieved on 19801101], DOI: 10.1016/0025-5408(80)90247-0

## Description

### Technical field

The invention relates to aluminium sulfate based shotcrete accelerators, in particular alkali-free aluminium sulfate based shotcrete accelerators (AFA).

### Background of the invention

Accelerators for accelerating the setting and hardening of compositions comprising hydraulic binders such as concrete, mortar or shotcrete are well known to the skilled person. Conventional accelerators often include alkali metals but these accelerators often are associated with undesired drawbacks. Alkali-free accelerators are a well-known and growing technology for the application of shotcrete. The chemistry of these accelerators is based on aluminium sulfate, in particular on combinations of aluminium salts such as aluminium sulfate, aluminium hydroxide and aluminum hydroxysulfates, which can be used in form of a suspension.

The suspensions based on aluminum sulfate are generally unstable due to non-controlled phase assemblage of aluminium-sulfate phases resulting e.g. in segregation or gel formation. Thus, suspensions based on aluminium sulfate are generally unstable over a period of a few hours to a few months. They may segregate, agglomerate or gel, depending on the production and storage conditions.

Approaches to circumvent this instability include the use of stabilizers or fluidizers which improve the situation in delaying the stability problem over a certain period of time but the inherent instability remains. The current approaches have the further disadvantage that the number of constituents increases by addition of stabilizers, fluidizers, etc. which make the system more complex and less robust. The object of this prior art approach is to stabilize something which is not stable.

WO 2015/092004 is directed to methods for producing a shotcrete accelerator, wherein one method comprises reacting sulfuric acid and aluminium hydroxide. It is mentioned that aqueous suspensions obtained by the methods may comprise jurbanite.

Wing, Y., et al., Materials Reseach Bulletin, Elsevier, Kidlington, GB, vol. 15, no. 11, pages 1649-1654, is concerned with proton conducting membranes composed of hydronium alunite.

### Summary of the invention

The object of the invention was to overcome the problems of the prior art discussed above. Specifically, the object was to provide redispersible solids of aluminate sulfate based accelerators, in particular alkali free aluminate sulfate based accelerators, for shotcrete applications. In particular, it should be possible to provide the accelerator in solid form, wherein the solid is easily redispersible in water to obtain stable dispersions or slurries which are the common usage form for accelerators.

The use of common stabilizers or fluidizers should not be necessary to achieve redispersibility of the solids and stability of the dispersions.

As mentioned above suspensions based on aluminum sulfate are generally unstable due to non-controlled phase assemblage of aluminium - sulfate phases. The invention concerns a new way of producing the accelerator so as to tailor the phases in equilibrium when redispersed in the suspension. This was achieved in analyzing which phases are formed in the Al₂O₃-SO₃-H₂O system, in studying what their stability domain is and identifying new ways of producing the most interesting ones in a stable form. Thus, the present invention had a complete other approach to tackle the problem of stability of aluminium sulfate based suspensions compared to the prior art approach: instead of stabilizing suspensions which are unstable, the invention relates to the provision of stable phases.

The present invention also relates to a method for producing a shotcrete accelerator which is a solid comprising at least one of jurbanite and hydronium alunite, wherein the solid further comprises Al₂(SO₄)₃·xH₂O, wherein 14 < x < 20, wherein the method comprises
a) reacting a mixture of a1) aluminium sulfate, a2) aluminium hydroxide and a3) water, wherein the molar ratio of Al to SO₄ is in the range of from 2/3 to 3/2, at a temperature in a range of 40°C to 140°C, and
b) cooling down the reaction mixture to obtain a solid,

wherein the water content in the mixture is set to a water content A so that the molar ratio of H₂O to Al is in a range of from 5.5 to 6.7, or
wherein the water content in the mixture is set to a water content B which is greater than water content A and the water content is reduced to the water content A in the course of reacting step a) by temporarily allowing partial removal of water from the mixture through evaporation.

Surprisingly, the shotcrete accelerator of the invention can be provided as a redispersible solid. The solid can be dispersed in water easily to produce stable dispersions or slurries, which solid content can be varied to a large extent. The addition of common stabilizers or fluidizers is not necessary. Extended shelf life of the solids or the aqueous dispersions/slurries and reduced transport costs are the main advantages compared to existing technologies. The reduced transport costs are due to possibility of transporting the accelerator as a solid and produce the dispersion or slurry on site of usage, whereas conventional accelerators must be transported as a dispersion/slurry.

Thus, the invention allows producing redispersible solid, e.g. in form of blocks (bulky pieces), flakes or powder. The solid can be stored as solid or redispersed in water at any time, e.g. immediately after the synthesis to months later.

The invention also relates to the use of the inventive shotcrete accelerators. Preferred embodiments are given in the dependent claims.

### Brief description of the figures

- Fig. 1:: XRD spectrum of synthesized pure phase of jurbanite
- Fig. 2:: XRD spectrum of synthesized pure phase of alunogen
- Fig. 3:: XRD spectrum of mixture of synthesized phases of jurbanite and alunogen prepared according to example 1
- Fig. 4:: XRD spectrum of mixture of synthesized phases of hydronium alunite and alunogen prepared according to example 2
- Fig. 5:: Photograph of solid product obtained in example 1

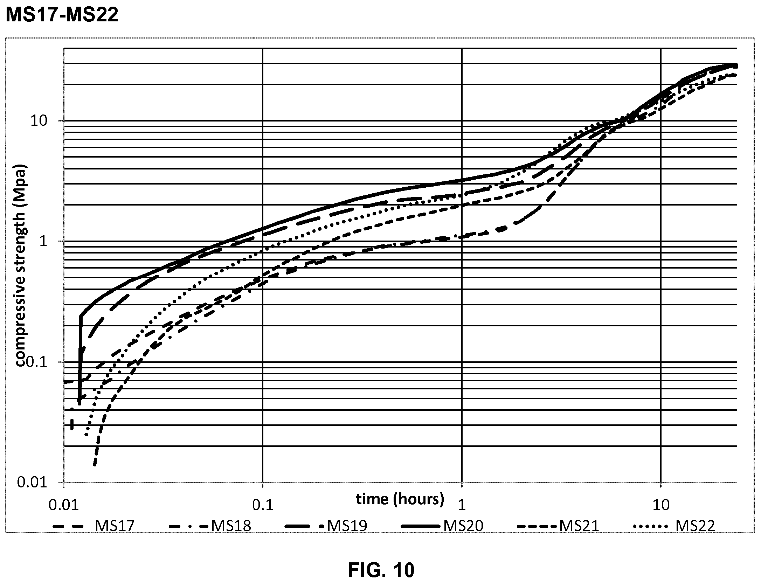

- Fig. 6-10:: Diagrams of performance tests related to strength development of samples.

### Detailed description of the invention

Accelerators for compositions or construction materials, respectively, comprising a hydraulic binder such as shotcrete are known to the skilled person, and are substances or admixtures, which accelerate the setting and/or hardening of compositions comprising a hydraulic binder such as shotcrete. Accelerators can be used in powder or liquid form. Typical examples of hydraulic binders are cement, lime and slaked lime, where cement is preferred. Typical examples for compositions or construction materials comprising a hydraulic binder, e.g. cement, are shotcrete, cement suspensions, e.g. for injections, mortar and concrete.

Accelerators suitable for shotcrete are designated shotcrete accelerators. Shotcrete includes sprayed concrete and sprayed mortar. Shotcrete usually comprises cement as the hydraulic binder. There exist wet and dry spray methods for applying shotcrete.

Wet sprayed concrete or mortar means delivery of a ready-mixed concrete or mortar comprising e.g. aggregate, cement, water and sprayed concrete admixtures to the nozzle in a workable mix. For spraying, the wet concrete or mortar is mixed at the nozzle with air and shotcrete accelerators and then applied. Dry sprayed concrete or mortar means delivery of a ready-mixed concrete or mortar comprising e.g. aggregate, cement and sprayed concrete admixtures but without mixing water. This ready-mixed formulation is either completely dry (dust dry) or is dampened by the inherent moisture in the aggregate. For the spraying operation, the dry concrete is mixed at the nozzle with water and shotcrete accelerators and then applied.

Shotcrete methods are used for instance when formwork is not possible or for the fabrication of linings or enforcing layers in underground constructions, mining or hollow spaces, e.g. in tunnels, galleries or ducts. Shotcrete methods are also suitable for stabilization or compaction of natural formations, such as rocks, declivities, excavations and building grounds.

The shotcrete accelerator obtainable by a method of the invention is a solid comprising jurbanite and/or hydronium alunite, wherein the solid further comprises Al₂(SO₄)₃·xH₂O, wherein 14 < x < 20.

Jurbanite has the chemical formula Al(SO₄)OH·5H₂O. Hydronium alunite has the chemical formula (H₃O)Al₃(SO₄)₂(OH)₆.

Al₂(SO₄)₃·xH₂O, wherein 14 < x < 20, is in particular alunogen. Alunogen has a variable water content, the most common and most stable are Al₂(SO₄)₃·17H₂O and Al₂(SO₄)₃·18H₂O.

Preferred embodiments of the shotcrete accelerator are the following solids:
a) a solid comprising jurbanite and Al₂(SO₄)₃·xH₂O, wherein 14 < x < 20, or
b) a solid comprising jurbanite, hydronium alunite and Al₂(SO₄)₃·xH₂O, wherein 14 < x < 20.

The following indications of weight proportions are based on the dry weight of the shotcrete accelerator. The same weight proportions equally apply when based on the solid.

It is preferred that the shotcrete accelerator comprises a total amount of jurbanite and/or hydronium alunite and Al₂(SO₄)₃·xH₂O, wherein 14 < x < 20, in the range of from 80 to 100% by weight, more preferably from 95 to 100% by weight, based on the dry weight of the shotcrete accelerator.

The shotcrete accelerator may, for instance, comprise a total amount of jurbanite and/or hydronium alunite in the range of from 30 to 99% by weight, more preferably from 50 to 97% by weight, based on the dry weight of the shotcrete accelerator.

Depending on the alternative synthesis routes dicussed below, the main phase is either jurbanite or hydronium alunite. Hence, in the route where hydronium alunite is the main phase, the amount of jurbanite is usually low or even absent and vice versa.

In one embodiment, the shotcrete accelerator may, for instance, comprise from 50 to 99% by weight, more preferably from 80 to 97% by weight, of jurbanite, based on the dry weight of the shotcrete accelerator, or in another embodiment, the shotcrete accelerator may, for instance, comprise from 30 to 99% by weight, more preferably from 50 to 97% by weight, of hydronium alunite, based on the dry weight of the shotcrete accelerator.

In one embodiment, the shotcrete accelerator preferably comprises from 1 to 50% by weight, more preferably from 3 to 20% by weight, of Al₂(SO₄)₃·xH₂O, wherein 14 < x < 20, based on the dry weight of the shotcrete accelerator.

The shotcrete accelerator is a solid. As explained below the shotcrete accelerator is produced in solid form.

The solid shotcrete accelerator can be e.g. in form of a powder, flakes or blocks. The solid is in particular a dispersible or redispersible solid, i.e. it can be dispersed in water resulting in an aqueous dispersion or slurry.

The solid is stable since solid phases are included. The solid, preferably in form of powder or flakes, can be stored as solid for months and redispersed in water just before use on site of application.

The solid of the shotcrete accelerator essentially includes only pure active substances. Neither fluidizers nor stabilizers are required.

Apart from the components mentioned above, the solid may optionally include other components. In the following other components refer to components which are different from jurbanite, hydronium alunite, Al₂(SO₄)₃·xH₂O, wherein 14 < x < 20, and water.

The solid may optionally comprise one or more other components such as other aluminium compounds and/or common additives for improving certain properties. Other aluminium compounds refer to other reaction products obtained from the raw materials used, such as e.g. Al₁₀(SO₄)₆(OH)₁₈·37H₂O.

Examples for suitable additives are Mg(OH)₂ or Ca(OH)₂ or reaction products thereof, amines like DEA (diethanolamine) or TEA (triethanolamine); thixotropic agents, e.g. sepiolite, formiates; and fluorides. The additives can optionally be added to the solid or to an aqueous dispersion or slurry thereof.

In principle, the solid may optionally comprise fluidizers and/or stabilizers as additives. However, it is preferred that the solid does not contain any fluidizer or stabilizer. Examples of stabilizers and fluidizers are polycarboxylates, hydroxycarboxylic acids, phosphoric acids, salts of phosphoric acids or hydroxycarboxylic acids, sepiolite or bentonite. Phosphoric acids are e.g. orthophosphoric acid, metaphosphoric acid and pyrophosphoric acid.

The content of additives in the shotcrete accelerator is preferably less than 15 % by weight, more preferably less than 10 % by weight, based on the dry weight of the shotcrete accelerator.

In particular, it is preferred that the shotcrete accelerator is an alkali-free accelerator. Moreover, it is preferred that the shotcrete accelerator is free of fluidizer and stabilizer. Alkali-free means that the alkali content, calculated as Na₂O equivalent, is less than 1 % by weight, preferably less than 0.5 % by weight, based on the dry weight of the shotcrete accelerator. As known in the field of cement applications, Na₂O equivalent refers to Na₂O + 0.658 K₂O. Free of fluidizer and stabilizer means that the total amount of fluidizer and stabilizer is less than 0.1 % by weight, preferably less than 0.01 % by weight, based on the dry weight of the shotcrete accelerator. It is generally preferred that the shotcrete accelerator does not contain any fluidizer or stabilizer. Typically, the chloride content should be < 0,1% with respect to corrosion.

The invention relates to a method for producing a shotcrete accelerator which is a solid comprising at least one of jurbanite and hydronium alunite, wherein the solid further comprises Al₂(SO₄)₃·xH₂O, wherein 14 < x < 20. The method comprises in step a) reacting a mixture of a1) aluminium sulfate, a2) aluminium hydroxide and a3) water, wherein the molar ratio of Al to SO₄ is in the range of from 2/3 to 3/2, at a temperature in a range of 40°C to 140°C, preferably 50 to 130°C, more preferably 60°C to 120°C.

The mixture comprises and preferably essentially consists of a1) aluminium sulfate, a2) aluminium hydroxide and a3) water
Within the present context sulfuric acid is generally a concentrated sulfuric acid. Sulfuric acids include water and are defined by their content of H₂SO₄. A suitable sulfuric acid has e.g. a content of H₂SO₄ of at least 50 % by weight. Sulfuric acids having a content of H₂SO₄ in the range of 60 to 90 % by weight are particularly preferred.

The sulfate compound used is aluminium sulfate. All common commercial products of aluminium sulfate can be used, including technical grade aluminium sulfates. Aluminium sulfate includes anhydrous aluminium sulfate, hydrates of aluminium sulfate and mixtures thereof, wherein hydrates of aluminium sulfate are generally preferred. Aluminium sulfate forms a number of different hydrates, e.g. the hexadecahydrate and the octadecahydrate.

All commercial products can be used as aluminium hydroxide. The aluminium hydroxide may be amorphous aluminium hydroxide or crystalline aluminium hydroxide or mixtures thereof. All crystal modifications of aluminium hydroxide are suitable, e.g. γ-Al(OH)₃, designated as gibbsite, β-Al(OH)₃, designated as bayerite, triclinic Al(OH)₃, designated as nordstrandite. Apart from Al(OH)₃ also water-poor aluminium hydroxides AIO(OH) such as α-AlO(OH) (diaspore) oder γ-AlO(OH) (boehmite) are suitable. Bauxite can also be used as aluminium hydroxide.

Optionally water may be added to the mixture. With respect to the water content of the mixture, water introduced e.g. hydrate water is to be considered so that the mixture may achieve the desired water content by such starting materials. However, generally the addition of water to the mixture is preferred or necessary.

The molar ratio of Al to SO₄ in the mixture is in the range of from 2/3 to 3/2, preferably from 0.9 to 1.1.

The reaction of the mixture is usually carried out in a closed system. A closed system means that educts and products, in particular water, can not escape from the system. The reaction can be carried out e.g. under reflux or in a closed reactor. For a reaction under reflux conventional reflux means such as a reflux condenser may be used.

The reaction of the mixture can be carried out by two alternative routes, namely by a stoichiometric route where the desired water content is adjusted initially in the mixture or by a concentration route where water is initially added in excess to the mixture with respect to the desired water content but in the course of the reaction excessive water is removed by evaporation.

According to the first embodiment according to the stoichiometric route, the water content in the mixture is set to a water content A so that the molar ratio of H₂O to Al is in a range of from 5.5 to 6.7, preferably from 5.5 to 6.0. As indicated above, water introduced e.g. hydrate water is to be considered for the water content of the mixture.

If the method is carried out according to the first embodiment, the mixture is preferably reacted at a temperature in a range of 90°C to 140°C, preferably from 110°C to 130°C.

In the method according to the first embodiment the mixture melts at the beginning of the reaction. When the melt thickens the reaction is completed and the mixture can be cooled down, e.g. by allowing the mixture to flow out of the reactor. Within minutes it becomes a solid.

Advantages of the first embodiment are that the method is easy, fast and reproducible. Higher temperatures than current production methods are necessary.

According to the second embodiment according to the concentration route, the water content in the mixture is set to a water content B which is greater than water content A mentioned above for the first embodiment and the water content is reduced to the water content A in the course of reacting step a) by temporarily allowing partial removal of water from the mixture through evaporation. The partial removal of water can be effected e.g. by opening the closed system, e.g. by temporarily interrupting reflux or temporarily opening the closed reactor.

The water content B is generally greater than a molar ratio of H₂O to Al of 6.7 and preferably in the range of from more than 6.7 to 24, more preferably in the range of from 9.5 to 13.7.

If the method is carried out according to the second embodiment, the mixture is preferably reacted at a temperature in a range of 50°C to 100°C, preferably from 70°C to 90°C. After the partial removal of water by evaporation, the temperature may be decreased to some extent with respect to the initial temperature, e.g. the temperature may be decreased by 10 to 30°C with respect to the initial temperature.

In the method according to the second embodiment the mixture dissolves at beginning and the solution turns into yellowish. This indicates complete solution and start of the reaction. The partial removal of water by evaporation is preferably started when complete solution of the starting material occurs. When the water removal has reached the desired level so that the water content is reduced to the water content A, the system is again closed in order to avoid further evaporation. When the mixture starts to thicken due to growth of crystals, the reaction is complete and the reaction mixture can be cooled down, e.g. by allowing the mixture to flow out of the reactor. For instance, within 5 to 10 minutes the mixture becomes a solid.

Advantages of the second embodiment are that the method is easy, fast and reproducible. Evaporation of water is necessary.

The reaction time within the reactor until starting cooling down may be e.g. in the range of about 30 min to 4 h. In the first embodiment (stoichiometric route) the reaction time may be e.g. in the range of 30 min to 2 h. In the second embodiment (concentration route) the reaction time may be e.g. in the range of 1 to 4 h.

The reaction may optionally be carried out as a hydrothermal synthesis. The reaction can be carried out e.g. at atmospheric pressure or overpressure, e.g. at a pressure of at least 2 bar, e.g. in a range of 3 to 15 bar.

When the reaction is completed the reaction mixture is cooled down. Usually the reaction mixture is cooled to room temperature, e.g. to about 15 to 25°C, but cooling down to lower temperatures than room temperature is also possible. It is preferred to cool down the reaction mixture quickly, e.g. by removing the reaction mixture from the reactor. Cooling down can alternatively be effected by spraying.

When the reaction mixture is cooled down it becomes a solid, usually within a few minutes. The solid obtained may be dried and/or comminuted, if necessary. The solid obtained may be used as such or stored. Thus, the shotcrete accelerator in form of the solid is obtainable by the method of the invention.

The solidification of the reaction mixture upon cooling down is a particular feature of the inventive method. Since the shotcrete accelerator is produced as a solid the method is a direct solid synthesis. The solid obtained by the method is dispersible in water. While the shotcrete accelerator is directly produced as a solid by the inventive method, conventional commercial methods generally produce a shotcrete accelerator in form of a suspension or solution.

The invention also relates to the use of the shotcrete accelerator of the invention or an aqueous suspension or slurry of the solid as an accelerator for shotcrete or for a construction material comprising a hydraulic binder. The shotcrete accelerator may be added to the shotcrete or the construction material e.g. in an amount of 0.1 to 15 % by weight, preferably 5 to 10 % by weight, more preferably 5 to 8 % by weight, based on the amount of hydraulic binder contained in the shotcrete or construction material, respectively, wherein the shotcrete accelerator is preferably a dispersion having a solid content in the range of 40 to 60% by weight. In other words, the amount of the shotcrete accelerator, preferably in form of a dispersion, added to the shotcrete or construction material, respectively, is e.g. such that the solid content of the shotcrete accelerator added is 0.04 to 9 % by weight, preferably 2 to 6 % by weight, based on the amount of hydraulic binder contained in the shotcrete or construction material, respectively. As mentioned above, typical examples for construction materials comprising a hydraulic binder, e.g. cement, other than shotcrete are cement suspensions, e.g. for injections, mortar and concrete.

### Examples

### Example 1 (Precipitation by concentration)

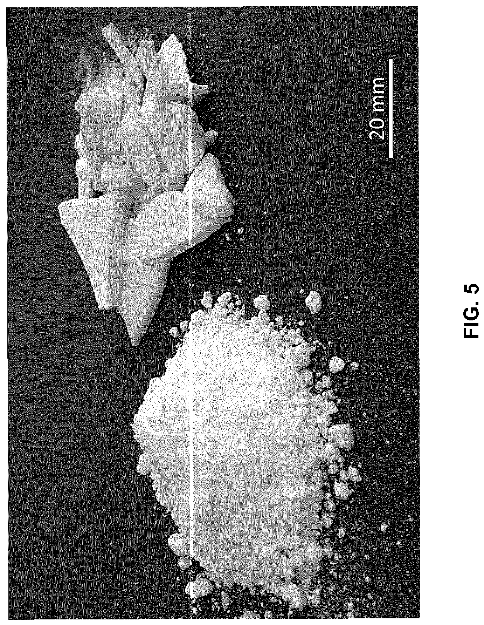

Aluminium sulfate hydrate (Al₂(SO₄)₃·14H₂O) and aluminium hydroxide powders were mixed in a weight ratio of 8:1 with 4 weight parts of water at 80°C in a closed reactor. After a few minutes the solution turns yellowish showing that all starting materials were dissolved and the reaction had started. The reactor was then opened to allow evaporation of water. When 3 to 3.5 weight parts of the water were evaporated, the reactor was closed and temperature was set to 60°C. After some time (about 1 to 3 hours), the mix thickens due to growth of the crystals in the solution. The mixture was then rapidly cooled down to room temperature and became a solid within five to ten minutes. Fig. 5 is a photograph of the solid obtained which is broken down to blocks and eventually ground to a powder, respectively.

The main phases of the solid formed were
1. Al(SO₄)OH·5H₂O (jurbanite)
2. Al₂(SO₄)₃·xH₂O, wherein 14 < x < 20 (alunogen, most probably x = 17-18) Traces of Al₁₀(SO₄)₆(OH)₁₈·37H₂O can be observed.

The solid can be either kept as solid or redispersed as a suspension in water.

### Example 2 (direct precipitation from stoichiometry)

Aluminum sulfate hydrate (Al₂(SO₄)₃·14H₂O) and aluminium hydroxide were mixed with water (weight ratios 8:1:0.8) at 120°C. After some minutes the solids were molten. The mix was kept at 120°C while mixing for about 1 hour. Upon starting to thicken, the mix was then flowed out from the reactor and cooled down to room temperature. Within minutes it became a solid.

The main phases of the solid formed were
1. (H₃O)Al₃(SO₄)₂(OH)₆ (hydronium alunite), more than 50%
2. Al₂(SO₄)₃·xH₂O, wherein 14 < x < 20 (alunogen, most probably x = 17-18)
3. Al(SO₄)OH·5H₂O (jurbanite), only traces

The solid can be either kept as solid or redispersed as a suspension in water.

### Analysis by x-ray diffraction (XRD)

The solids prepared in the examples were analysed by XRD from which the above mentioned main phases were determined.

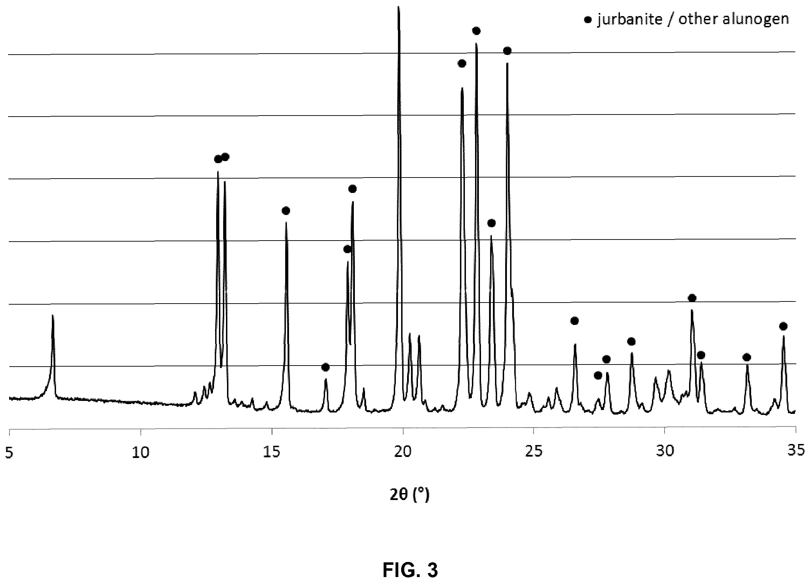

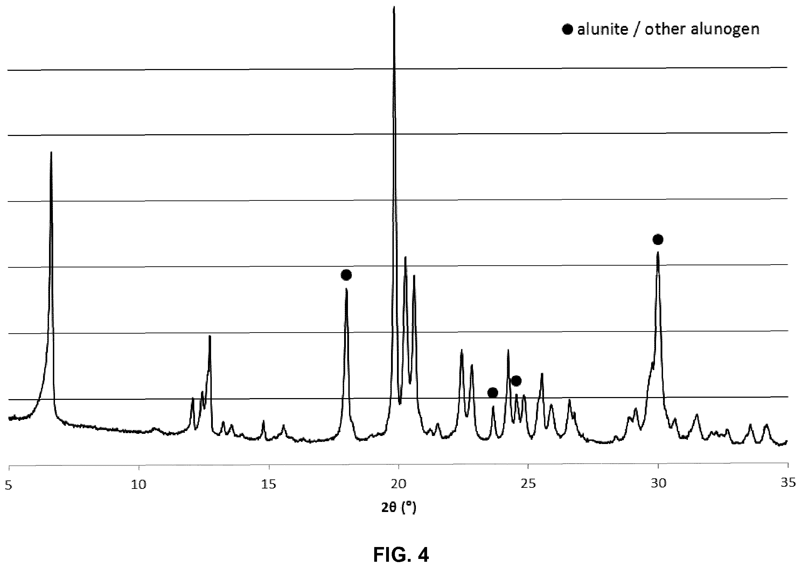

Fig. 3 is a XRD spectrum of the solid prepared according to example 1 showing a mixture of phases jurbanite and alunogen. All peaks marked with black circle (•) are jurbanite, all other peaks belong to alunogen. Fig. 4 is a XRD spectrum of the solid prepared according to example 2 showing a mixture of phases hydronium alunite and alunogen. All peaks marked with black circle (•) are hydronium alunite, all other peaks belong to alunogen.

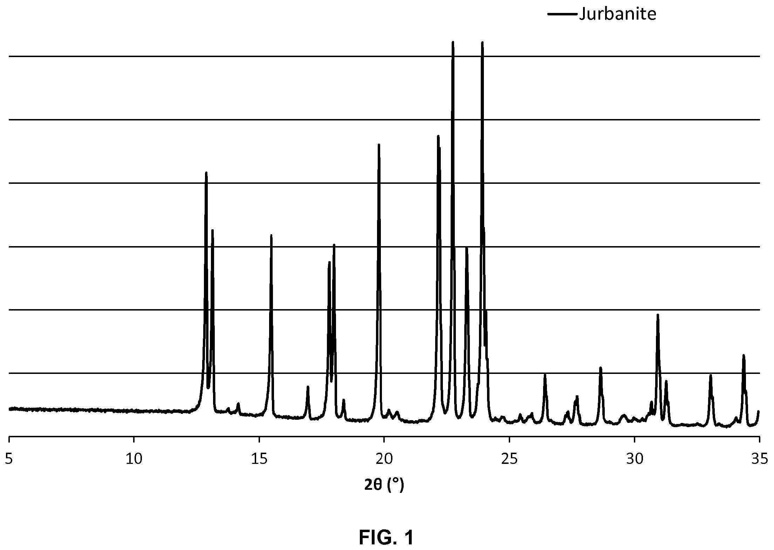

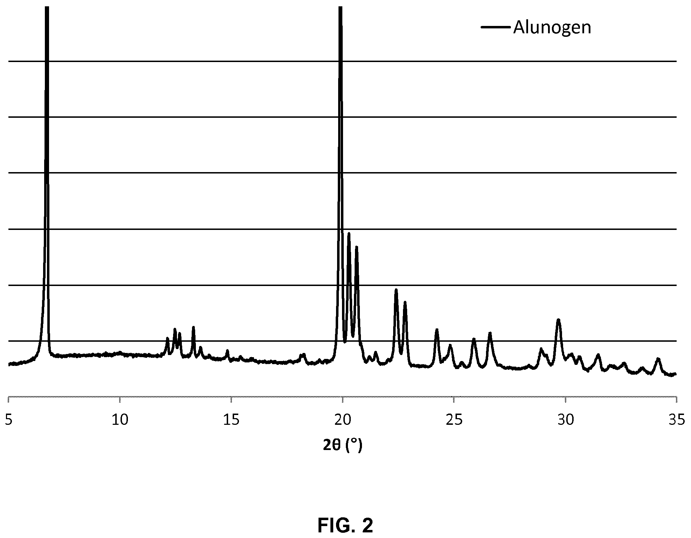

The solid prepared according to example 1 was subjected to a refinement process. Fig. 1 is a XRD spectrum of the refined solid showing pure phase of jurbanite (reference, not according to the invention). Fig. 2 is a XRD spectrum of alunogen showing pure phase of alunogen (reference, not according to the invention).

### Performance tests

The solids prepared in the examples were tested as shotcrete accelerators added to cementitious compositions to prepare minishots and compared with commercial shotcrete accelerators. The performance was tested by determining the strength development of the cementitious compositions to which the shotcrete accelerator has been added. The strength development was evaluated continuously by ultrasound wave velocity measurement of the modulus of the cement paste.

Acc2 is an aqueous dispersion of the solid obtained in Example 1. Acc1 and Acc3 are aqueous dispersions of solids obtained by the synthesis route of precipitation by concentration similar to the process of Example 1. Acc4 is an aqueous dispersion of the solid obtained in Example 2.

The commercial shotcrete accelerators used are all Sigunit^{®} products of Sika Schweiz AG which are aqueous alkali-free Al based accelerators.

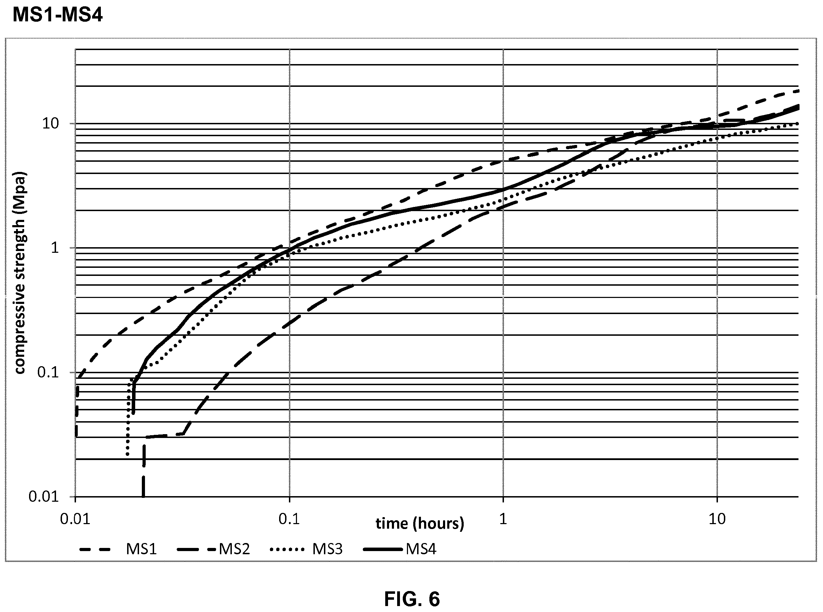

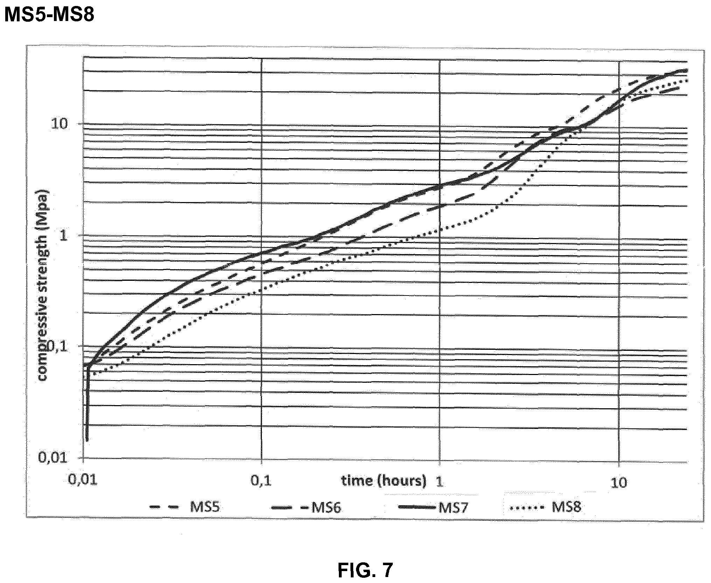

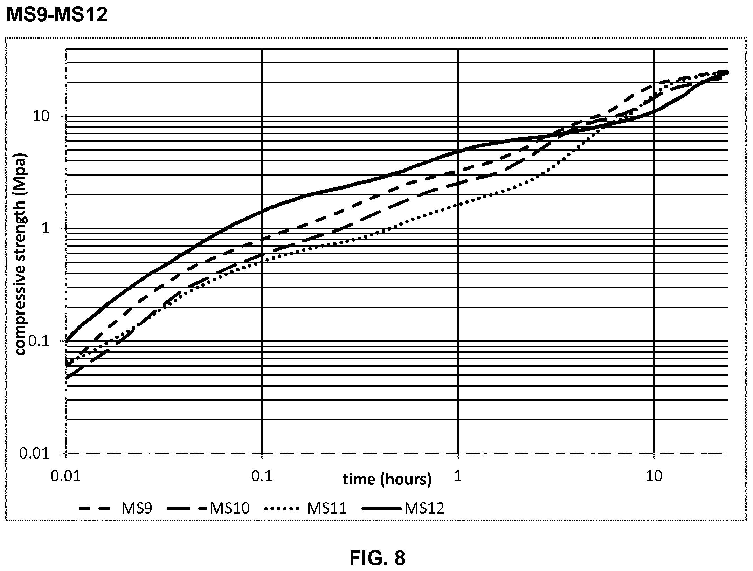

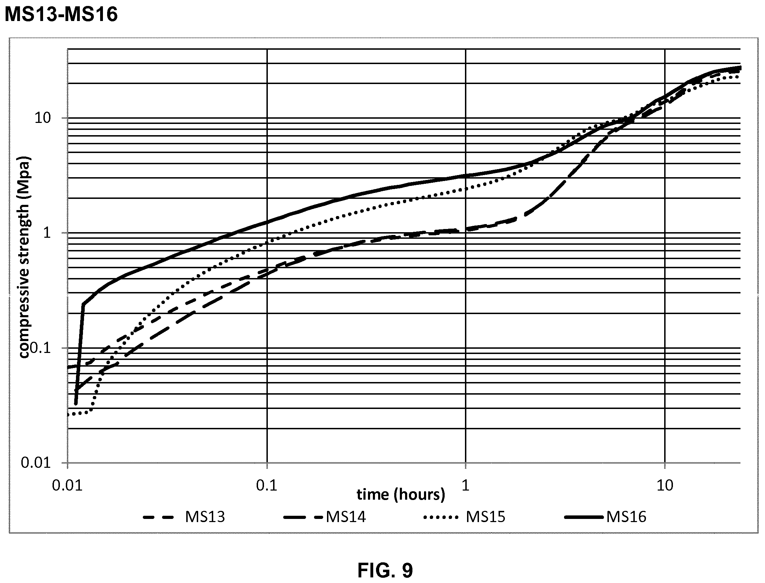

In the following tables the compositions of the minishots based on cement pastes prepared are given. The amount of the accelerators is given in % based on the weight of the binder. Those dosages correspond to dispersions. In all instances the solid content of the accelerator in the dispersion is around 50%. The strength development of minishots MS1 to MS22 are shown in Fig. 6 (MS1 to MS4), Fig. 7 (MS5 to MS8), Fig. 8 (MS9 to MS12), Fig. 9 (MS13 to MS16), and Fig. 6 (MS17 to MS22), respectively. Examples MS4, MS7, MS12, MS16, MS19, and MS20 are according to the present invention.

**Table 1**

| | MS1 | MS2 | MS3 | MS4 | MS5 | MS6 | MS7 | MS8 |
|---|---|---|---|---|---|---|---|---|
| CEM III-A* [kg] | 480 | 480 | 480 | 480 | | | | |
| CEM II-A/V* [kg] | | | | | 480 | 480 | 480 | 480 |
| L53 AF (cc)** [%] | 6 | | | | 6 | | | |
| L93 AF** [%] | | 7 | | | | 7 | | |
| L-5710 AF** [%] | | | 6 | | | | | 6 |
| Acc1 [%] | | | | 6 | | | | |
| Acc2 [%] | | | | | | | 7 | |

| | | | | | | | | |
|---|---|---|---|---|---|---|---|---|
| * cement grade ** type of Sigunit^{®} accelerator | | | | | | | | |

**Table 2**

| | MS9 | MS10 | MS11 | MS12 | MS13 | MS14 | MS15 | MS16 |
|---|---|---|---|---|---|---|---|---|
| CEM II-A/V* [kg] | 400 | 400 | 400 | 400 | 400 | 400 | 400 | 400 |
| GGBS*** [kg] | 80 | 80 | 80 | 80 | | | | |
| Slag SF*** | | | | | 80 | 80 | 80 | 80 |
| L53 AF (cc)** [%] | 6 | | | | 6 | | | |
| L93 AF** [%] | | 7 | | | | 7 | | |
| L-5710 AF** [%] | | | 6 | | | | 6 | |
| Acc2 [%] | | | | 7 | | | | |
| Acc3 [%] | | | | | | | | 7 |

| | | | | | | | | |
|---|---|---|---|---|---|---|---|---|
| * cement grade ** type of Sigunit^{®} accelerator *** GGBS = Ground granulated blastfurnace slag; SF = slag superfine | | | | | | | | |

**Table 3**

| | MS17 | MS18 | MS19 | MS20 | MS21 | MS22 |
|---|---|---|---|---|---|---|
| Optimo 4SZ* [kg] | 368 | 368 | 368 | 368 | 368 | 368 |
| limestone [kg] | 82 | 82 | 82 | 82 | 82 | 82 |
| HPI L5601AF** [%] | 6 | | | | | |
| ECO L2401AF** [%] | | 6 | | | | |
| Acc4 [%] | | | 6 | 7 | | |
| 87ES L5710AF** [%] | | | | | 6 | |
| L53AFS** [%] | | | | | | 6 |

| | | | | | | |
|---|---|---|---|---|---|---|
| * cement of Holcim, Suisse ** type of Sigunit^{®} accelerator | | | | | | |

## Claims

1. A method for producing a shotcrete accelerator which is a solid comprising at least one of jurbanite and hydronium alunite, wherein the solid further comprises Al₂(SO₄)₃·xH₂O, wherein 14 < x < 20, comprising
a) reacting a mixture of a1) aluminium sulfate, a2) aluminium hydroxide and a3) water, wherein the molar ratio of Al to SO₄ is in the range of from 2/3 to 3/2, at a temperature in a range of 40°C to 140°C, and
b) cooling down the reaction mixture to obtain a solid,
wherein the water content in the mixture is set to a water content A so that the molar ratio of H₂O to Al is in a range of from 5.5 to 6.7, or wherein the water content in the mixture is set to a water content B which is greater than water content A and the water content is reduced to the water content A in the course of reacting step a) by temporarily allowing partial removal of water from the mixture through evaporation.

2. The process according to claim 1, wherein the water content B is so that the molar ratio of H₂O to Al is in the range of from more than 6.7 to 24.

3. The process according to any one of claim 1 or claim 2, wherein the mixture is reacted at a temperature in a range of 90°C to 140°C, if the water content is set to the water content A, or wherein the mixture is reacted at a temperature in a range of 40°C to 100°C, if the water content is set to the water content B.

4. The process according to any one of claims 1 to 3, wherein reacting the mixture is carried out under reflux or in a closed reactor, wherein in the case of setting the water content to the water content B, the partial removal of water is carried out by temporarily interrupting reflux or temporarily opening the closed reactor.

5. A shotcrete accelerator which is a solid comprising at least one of jurbanite and hydronium alunite, wherein the solid further comprises Al₂(SO₄)₃·xH₂O, wherein 14 < x < 20, obtainable according to a method according to any one of claims 1 to 4.

6. The shotcrete accelerator according to claim 5, wherein the solid comprises jurbanite and Al₂(SO₄)₃·xH₂O, wherein 14 < x < 20, or wherein the solid comprises jurbanite, hydronium alunite and Al₂(SO₄)₃·xH₂O, wherein 14 < x < 20.

7. The shotcrete accelerator according to any one of claims 5 to 6, wherein the total amount of jurbanite and/or hydronium alunite and Al₂(SO₄)₃·xH₂O, wherein 14 < x < 20, is in the range of from 80 to 100% by weight, preferably from 95 to 100% by weight, based on the dry weight of the shotcrete accelerator.

8. The shotcrete accelerator according to any one of claims 5 to 7, wherein the total amount of jurbanite and/or hydronium alunite is in the range of from 30 to 99% by weight, preferably from 50 to 97% by weight, and/or the total amount of Al₂(SO₄)₃·xH₂O, wherein 14 < x < 20, is in the range of from 1 to 50% by weight, preferably from 3 to 20% by weight, each based on the dry weight of the shotcrete accelerator.

9. The shotcrete accelerator according any one of claims 5 to 8, wherein the solid is in form of powder, flakes or blocks.

10. The shotcrete accelerator according any one of claims 5 to 9, wherein the shotcrete accelerator is an alkali-free accelerator and/or wherein the shotcrete accelerator is free of fluidizer and stabilizer.

11. Use of a shotcrete accelerator according any one of claims 5 to 10 or an aqueous suspension or slurry of the solid as an accelerator for shotcrete or for a construction material comprising a hydraulic binder.

## Patentansprüche

1. Verfahren zur Herstellung eines Spritzbetonbeschleunigers, bei dem es sich um einen Feststoff handelt, der Jurbanit und/oder Hydroniumalunit umfasst, wobei der Feststoff ferner Al₂(SO₄) ₃·xH₂O umfasst, wobei 14 < x < 20 ist, umfassend
a) Umsetzen einer Mischung aus a1) Aluminiumsulfat, a2) Aluminiumhydroxid und a3) Wasser, wobei das Molverhältnis von Al zu SO₄ im Bereich von 2/3 bis 3/2 liegt, bei einer Temperatur im Bereich von 40 °C bis 140 °C und
b) Abkühlen der Reaktionsmischung, um einen Feststoff zu erhalten,
wobei der Wassergehalt in der Mischung auf einen Wassergehalt A eingestellt wird, so dass das Molverhältnis von H₂O zu Al in einem Bereich von 5,5 bis 6,7 liegt, oder wobei der Wassergehalt in der Mischung auf einen Wassergehalt B eingestellt wird, der größer ist als Wassergehalt A, und der Wassergehalt im Verlauf des Reaktionsschritts a) auf den Wassergehalt A reduziert wird, indem vorübergehend eine teilweise Entfernung von Wasser aus der Mischung durch Verdampfung ermöglicht wird.

2. Verfahren nach Anspruch 1, wobei der Wassergehalt B so ist, dass das Molverhältnis von H₂O zu Al im Bereich von mehr als 6,7 bis 24 liegt.

3. Verfahren nach einem der Ansprüche 1 oder 2, wobei die Mischung bei einer Temperatur in einem Bereich von 90 °C bis 140 °C umgesetzt wird, wenn der Wassergehalt auf den Wassergehalt A eingestellt wird, oder wobei die Mischung bei einer Temperatur im Bereich von 40 °bis 100 °C umgesetzt wird, wenn der Wassergehalt auf den Wassergehalt B eingestellt wird.

4. Verfahren nach einem der Ansprüche 1 bis 3, wobei Umsetzen der Mischung unter Rückfluss oder in einem geschlossenen Reaktor durchgeführt wird, wobei bei Einstellung des Wassergehalts auf den Wassergehalt B die partielle Entfernung von Wasser durch vorübergehendes Unterbrechen des Rückflusses oder vorübergehendes Öffnen des geschlossenen Reaktors durchgeführt wird.

5. Spritzbetonbeschleuniger, der ein Feststoff ist, der Jurbanit und/oder Hydroniumalunit umfasst, wobei der Feststoff ferner Al₂(SO₄)₃·xH₂O umfasst, wobei 14 < x < 20 ist, das nach einem Verfahren nach einem der Ansprüche 1 bis 4 erhalten werden kann.

6. Spritzbetonbeschleuniger nach Anspruch 5, wobei der Feststoff Jurbanit und Al₂(SO₄)₃·xH₂O umfasst, wobei 14 < x < 20 ist, oder wobei der Feststoff Jurbanit, Hydroniumalunit und Al₂(SO₄)₃·xH₂O umfasst, wobei 14 < x < 20 ist.

7. Spritzbetonbeschleuniger nach einem der Ansprüche 5 bis 6, wobei die Gesamtmenge an Jurbanit und/oder Hydroniumalunit und Al₂(SO₄)₃·xH₂O, wobei 14 < x < 20 ist, im Bereich von 80 bis 100 Gew.-%, vorzugsweise von 95 bis 100 Gew.-%, bezogen auf das Trockengewicht des Spritzbetonbeschleunigers, liegt.

8. Spritzbetonbeschleuniger nach einem der Ansprüche 5 bis 7, wobei die Gesamtmenge an Jurbanit und/oder Hydroniumalunit im Bereich von 30 bis 99 Gew.-%, vorzugsweise von 50 bis 97 Gew.-%, liegt und/oder die Gesamtmenge an Al₂(SO₄ )₃·xH₂O, wobei 14 < x < 20 ist, im Bereich von 1 bis 50 Gew.-%, vorzugsweise von 3 bis 20 Gew.-%, jeweils bezogen auf das Trockengewicht des Spritzbetonbeschleunigers, liegt.

9. Spritzbetonbeschleuniger nach einem der Ansprüche 5 bis 8, wobei der Feststoff in Form von Pulver, Flocken oder Blöcken vorliegt.

10. Spritzbetonbeschleuniger nach einem der Ansprüche 5 bis 9, wobei der Spritzbetonbeschleuniger ein alkalifreier Beschleuniger ist und/oder wobei der Spritzbetonbeschleuniger frei von Fluidisierern und Stabilisatoren ist.

11. Verwendung eines Spritzbetonbeschleunigers nach einem der Ansprüche 5 bis 10 oder einer wässrigen Suspension oder Aufschlämmung des Feststoffs als Beschleuniger für Spritzbeton oder für ein Baumaterial, das ein hydraulisches Bindemittel umfasst.

## Revendications

1. Procédé de production d'un accélérateur de béton projeté qui est un solide comprenant au moins l'un parmi la jurbanite et l'alunite d'hydronium, dans lequel le solide comprend en outre Al₂(SO₄)₃·xH₂O, dans lequel 14 < x < 20, comprenant
a) mettre en réaction un mélange de a1) sulfate d'aluminium, a2) hydroxyde d'aluminium et a3) eau, dans lequel le rapport molaire Al sur SO₄ est dans la plage de 2/3 à 3/2, à une température dans la plage de 40 °C à 140 °C, et
b) refroidir le mélange réactionnel pour obtenir un solide,
dans lequel la teneur en eau dans le mélange est réglée jusqu'à une teneur en eau A de telle sorte que le rapport molaire de H₂O sur Al se situe dans une plage allant de 5,5 à 6, 7, ou dans lequel la teneur en eau dans le mélange est réglée jusqu'à une teneur en eau B qui est supérieure à la teneur en eau A et la teneur en eau est réduite à la teneur en eau A au cours de la mise en réaction de l'étape a) en permettant temporairement l'élimination partielle d'eau du mélange par évaporation.

2. Procédé selon la revendication 1, dans lequel la teneur en eau B est telle que le rapport molaire de H₂O sur Al est dans la plage de plus de 6,7 à 24.

3. Procédé selon l'une quelconque des revendications 1 ou 2, dans lequel on fait réagir le mélange à une température dans une plage de 90 °C à 140 °C, si la teneur en eau est réglée à la teneur en eau A, ou dans lequel on fait réagir le mélange à une température dans une plage de 40 °C à 100 °C, si la teneur en eau est réglée à la teneur en eau B.

4. Procédé selon l'une quelconque des revendications 1 à 3, dans lequel la mise en réaction du mélange est effectuée à reflux ou dans un réacteur fermé, dans lequel, lors du réglage de la teneur en eau à la teneur en eau B, l'élimination partielle de l'eau est effectuée par interruption temporaire du reflux ou ouverture temporaire du réacteur fermé.

5. Accélérateur de béton projeté qui est un solide comprenant au moins l'un parmi la jurbanite et l'alunite d'hydronium, dans lequel le solide comprend en outre Al₂(SO₄)₃·xH₂O, dans lequel 14 < x < 20, pouvant être obtenu selon un procédé selon l'une quelconque des revendications 1 à 4.

6. Accélérateur de béton projeté selon la revendication 5, dans lequel le solide comprend de la jurbanite et Al₂(SO₄)₃·xH₂O, dans lequel 14 < x < 20, ou dans lequel le solide comprend de la jurbanite, de l'alunite d'hydronium et Al₂(SO₄)₃·xH₂O, dans lequel 14 < x < 20.

7. Accélérateur de béton projeté selon l'une quelconque des revendications 5 à 6, dans lequel la quantité totale de jurbanite et/ou d'alunite d'hydronium et d'Al₂(SO₄)₃ ·xH₂O, dans lequel 14 < x < 20, est dans la plage de 80 à 100 % en poids, de préférence de 95 à 100 % en poids, sur la base du poids sec de l'accélérateur de béton projeté.

8. Accélérateur de béton projeté selon l'une quelconque des revendications 5 à 7, dans lequel la quantité totale de jurbanite et/ou d'alunite d'hydronium est dans la plage de 30 à 99 % en poids, de préférence de 50 à 97 % en poids, et/ou la quantité totale d'Al₂(SO₄)₃·xH₂O, dans lequel 14 < x < 20, est dans la plage de 1 à 50 % en poids, de préférence de 3 à 20 % en poids, chaque fois par rapport au poids sec de l'accélérateur de béton projeté.

9. Accélérateur de béton projeté selon l'une quelconque des revendications 5 à 8, dans lequel le solide est sous forme de poudre, de flocons ou de blocs.

10. Accélérateur de béton projeté selon l'une quelconque des revendications 5 à 9, dans lequel l'accélérateur de béton projeté est un accélérateur sans alcali et/ou dans lequel l'accélérateur de béton projeté est dépourvu de fluidifiant et de stabilisateur.

11. Utilisation d'un accélérateur de béton projeté selon l'une quelconque des revendications 5 à 10 ou d'une suspension aqueuse ou bouillie du solide comme un accélérateur pour béton projeté ou pour un matériau de construction comprenant un liant hydraulique.
